(19) Europäisches Patentamt
European Patent Office
Office européen des brevets

(11) EP 0 693 537 A2

(12) EUROPÄISCHE PATENTANMELDUNG

(43) Veröffentlichungstag:
**24.01.1996 Patentblatt 1996/04**

(51) Int. Cl.[6]: **C09B 62/513**

(21) Anmeldenummer: **95110625.1**

(22) Anmeldetag: **07.07.1995**

(84) Benannte Vertragsstaaten:
**CH DE FR GB LI**

(30) Priorität: **20.07.1994 DE 4425619**

(71) Anmelder: **BAYER AG**
**D-51368 Leverkusen (DE)**

(72) Erfinder:
- **Jäger, Horst, Dr.**
  **D-51375 Leverkusen (DE)**
- **Wolff, Joachim, Dr.**
  **D-51519 Odenthal (DE)**

(54) **Reaktivfarbstoffe, Verfahren zu deren Herstellung und deren Verwendung**

(57) Reaktivfarbstoffe der Formel

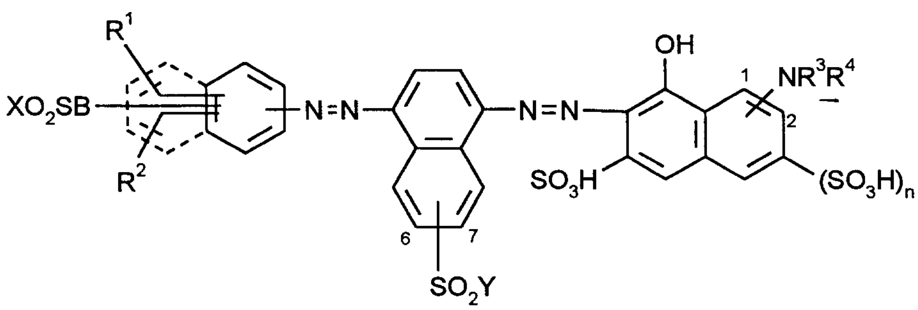

worin

X $CH=CH_2$ oder $CH_2CH_2Z$ ist, wobei Z eine unter Färbebedingungen abspaltbare Gruppe bedeutet,

und worin die übrigen Substituenten die in der Beschreibung angegebene Bedeutung haben, ergeben Färbungen und Drucke mit verbesserten Eigenschaften.



Printed by Rank Xerox (UK) Business Services
2.9.7/3.4

## Beschreibung

Die Erfindung betrifft neue Reaktivfarbstoffe, ein Verfahren zu deren Herstellung und deren Verwendung zum Färben und Bedrucken von Substraten.

Bifunktionelle Reaktivfarbstoffe auf Basis von Azofarbstoffen sind bereits bekannt, z.B. aus EP-A-581 729 und EP-A-559 617. Die Praxis des Färbens mit Reaktivfarbstoffen hat aber zu erhöhten Anforderungen an die Qualität der Färbungen und die Wirtschaftlichkeit des Färbeprozesses geführt. Die vorliegende Erfindung betrifft Reaktivfarbstoffe der Formel

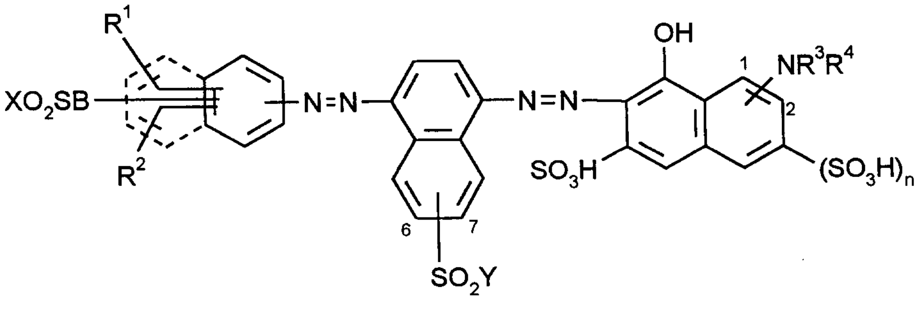

(1)

worin

| | |
|---|---|
| $R^1$ und $R^2$ | unabhängig voneinander Wasserstoffatom, $C_1$-$C_4$-Alkyl, insbesondere Methyl, $C_1$-$C_4$-Alkoxy, insbesondere Methoxy, Chlor, Carboxy oder Sulfo bedeuten, |
| B | eine direkte Bindung oder ein Brückenglied ist, |
| X | $CH=CH_2$ oder $CH_2CH_2Z$ ist, wobei Z eine unter Färbebedingungen abspaltbare Gruppe bedeutet, |
| Y | für Hydroxyl steht oder die Bedeutung von X hat, wobei der Rest $SO_2Y$ in 6- oder 7-Stellung gebunden ist, |
| n | 0 oder 1 ist, |
| $R^3$ | Wasserstoff oder $C_1$-$C_4$-Alkyl bedeutet, welches substituiert oder unsubstituiert ist, |
| $R^4$ | Wasserstoff oder $C_1$-$C_4$-Alkyl bedeutet, welches substituiert oder unsubstituiert ist, Phenyl, welches substituiert oder unsubstituiert ist und wobei die Gruppe $NR^3R^4$ in 1- oder 2-Stellung steht mit der Maßgabe, daß die Gruppe $NR^3R^4$ in 1-Stellung |

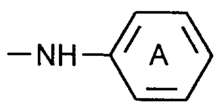

bedeutet, wobei der Phenylrest A unsubstituiert oder substituiert ist und wobei n = 1 wenn $NR^3R^4$ in 1-Stellung steht.

Für Z seien beispielhaft folgende Reste genannt: $OSO_3H$, $S_2O_3H$, $OCOCH_3$, $OSO_2CH_3$, Cl, $OPO_3H_2$, bevorzugt ist $OSO_3H$.

Beispiele für Substituenten der $C_1$-$C_4$-Alkylreste in der Bedeutung von $R^3$ sind: Hydroxy, Methoxy, Carboxy und Sulfo.

Beispiele für Substituenten der Phenylreste in der Bedeutung von $R^4$ sind: Chlor, Methyl, Methoxy, Carboxy und Sulfo.

Als Substituenten des Benzolkerns A in dem Rest $NR^3R^4$ sind beispielhaft folgende genannt: Methyl, Ethyl und Chlor.

Beispiele für Brückenglieder B sind: $-CH_2-$,

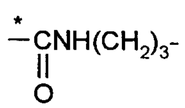 , 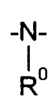 $(R^0 = H, CH_3)$ ,

*$-NHCO(CH_2)_3-$, wobei die mit Stern gekennzeichnete Bindung an die Diazokomponente geknüpft ist.

Im Rahmen der Formel (1) sind folgende Farbstoffe bevorzugt:

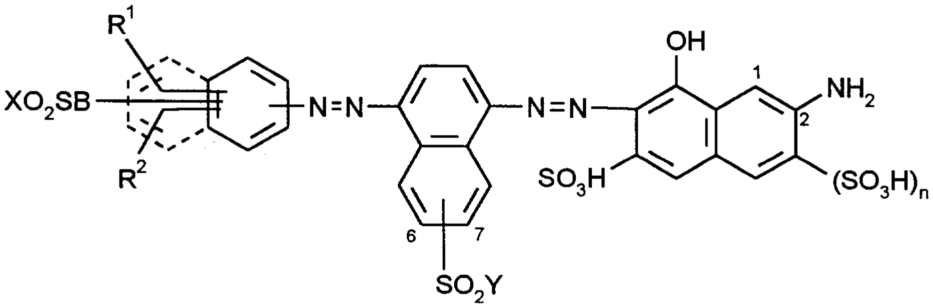

(1a)

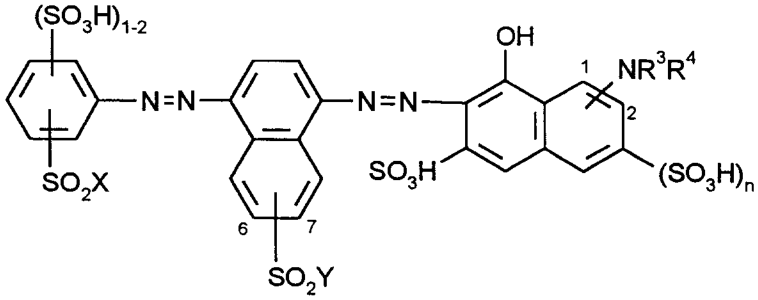

(2)

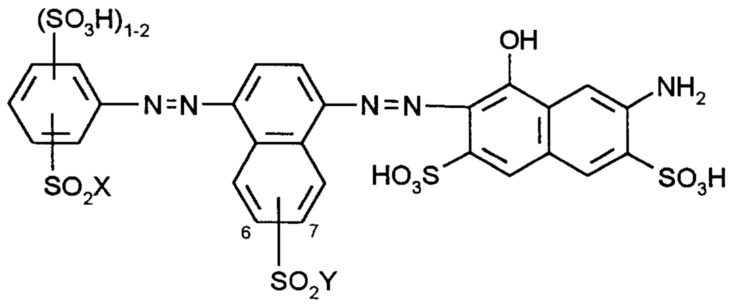

(3)

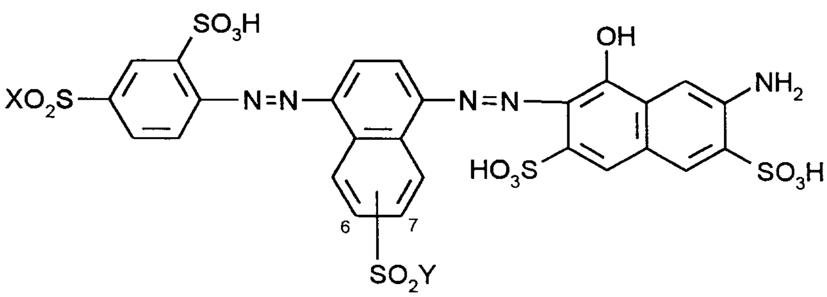

(4)

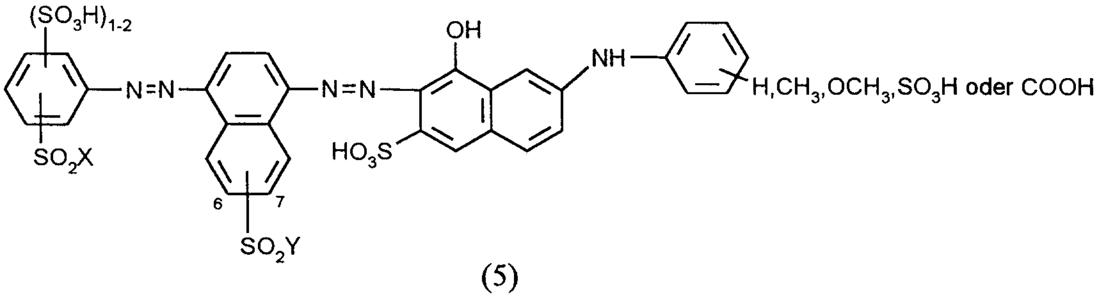

(5)

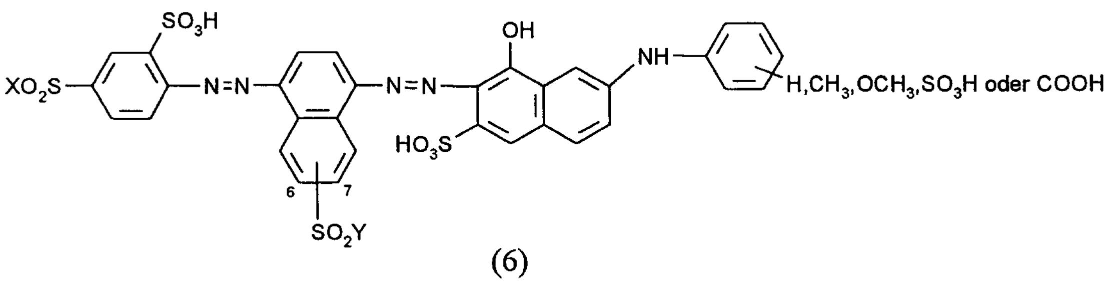

(6)

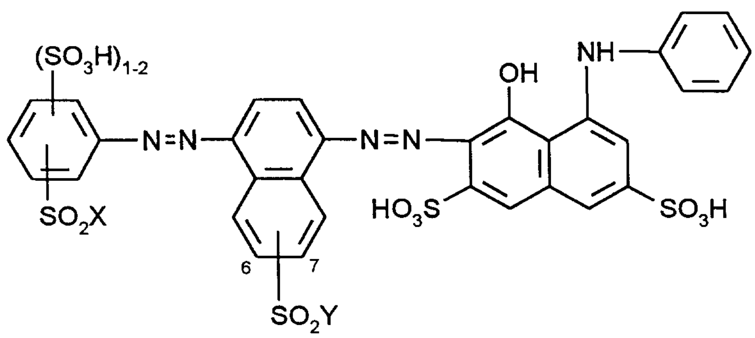

(7)

worin jeweils die Substituenten die angegebene Bedeutung haben.

Weiterhin sind Farbstoffe der Formeln (1) bis (7) bevorzugt, in denen Y für X steht, wobei die Reste X unabhängig voneinander gleich oder verschieden sein können.

Die Reaktionsbedingungen der Herstellung entsprechen denen auf dem Gebiet der Diazotierung und Kupplung üblichen Bedingungen. So erfolgt die Herstellung der erfindungsgemäßen Farbstoffe vorzugsweise im wäßrigen Medium.

Dabei werden Diazokomponenten der Formel

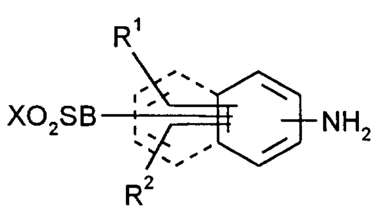

(8)

worin

B, $R^1$, $R^2$ und X die angegebene Bedeutung haben,

diazotiert und mit Kupplungskomponenten der Formel

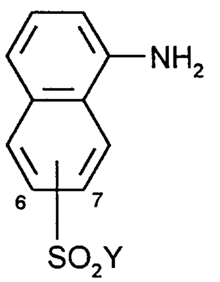

(9)

worin
Y die angegebene Bedeutung hat,
im pH-Bereich von 2 bis 6 vereinigt.

Die dabei resultierenden Monoazofarbstoffe werden wiederum diazotiert und mit Kupplungskomponenten der Formel

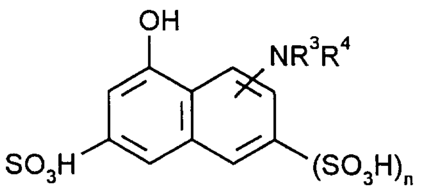

(10)

im pH-Bereich von 4 bis 8 zu Farbstoffen der Formel (1) gekuppelt werden.

Diazokomponenten der allgemeinen Formel (8), die als Ausgangsverbindungen zur Herstellung der erfindungsgemäßen Azoverbindungen dienen können, sind beispielsweise 3-(β-Sulfatoethylsulfonyl)-anilin, 2-Methoxy-5-(β-sulfatoethylsulfonyl)-anilin, 2,5-Dimethoxy-5-(β-sulfatoethylsulfonyl)-anilin, 2-Methoxy-4-(β-sulfatoethylsulfonyl)-anilin, 4-Methoxy-5-(β-sulfatoethylsulfonyl)-anilin, 2,4-Dimethoxy-5-(β-sulfatoethylsulfonyl)-anilin, 2-Methoxy-5-methyl-4-(β-sulfatoethyl-sulfonyl)-anilin, 2-Methoxy-5-(β-sulfatoethyl-sulfonyl)-anilin, 2-Methyl-5-(β-sulfatoethylsulfonyl)-anilin, 2,5-Dimethyl-4-(β-sulfatoethylsulfönyl)-anilin, 2,5-Dimethyl-4-(β-sulfatoethylsulfonyl)-anilin, 2,6-Dimethyl-4-(β-sulfatoethylsulfonyl)-anilin, 4-Methyl-3-(β-sulfatoethylsulfonyl)-anilin, 4-(β-Sulfatoethylsulfonyl)-anilin, 6-(β-Sulfatoethylsulfonyl)-2-aminonaphthalin-1-sulfönsäure, 8-(β-Sulfatoethylsulfonyl)-2-aminonaphthalin, 6-(β-Sulfatoethylsulfonyl)-2-aminonaphthalin, 8-(β-Sulfatoethylsulfonyl)-2-aminonaphthalin-6-sulfonsäure, 6-(β-Sulfatoethylsulfonyl)-2-aminonaphthalin-8-sulfonsäure und insbesondere die sulfogruppenhaltigen Amine wie 4-(β-Sulfatoethylsulfonyl)-anilin-2-sulfonsäure, 5-(β-Sulfatoethylsulfonyl)-anilin-2-sulfonsäure, 2-(β-Sulfatoethylsulfonyl)-anilin-5-sulfonsäure, 5-(β-Sulfatoethylsulfonyl)-anilin-2,4-disulfonsäure sowie die Derivate dieser Anilin- und Naphthalinverbindungen, in welchem die β-Sulfatoethylsulfonylgruppe durch die Vinylsulfonyl-, β-Thiosulfatoethylsulfonyl-, β-Phosphatoethylsulfonyl-, β-Chlorethylsulfonyl, β-Methoxyethylsulfonyl oder die β-Methansulfonyloxyethylsulfonyl-Gruppe ausgetauscht ist.

1-Aminonaphthalinverbindungen der Formel (9), die als Mittelkomponente zur Herstellung der erfindungsgemäßen Diazoverbindungen verwendet werden können, sind beispielsweise 1-Aminonaphthalin-6-sulfonsäure, 1-Aminonaphthalin-7-sulfonsäure, 1-Amino-6-(β-sulfatoethylsulfonyl)-napthalin, 1-Amino-7-(β-sulfatoethylsulfonyl)-naphthalin.

Kupplungskomponenten der Formel (10) sind beispielsweise folgende: 2-Amino-8-hydroxy-naphthalin-3,6-disulfonsäure, 2-Phenylamino-8-hydroxy-naphthalin-3,6-disulfonsäure, 2-Phenylamino-8-hydroxy-naphthalin-6-sulfonsäure, 2-(3'-Sulfophenylamino)-8-hydroxy-naphthalin-6-sulfonsäure, 2-(4'-Carboxyphenylamino)-8-hydroxynaphthalin-6-sulfonsäure, 2-Amino-8-hydroxy-naphthalin-6-sulfönsäure, 1-Phenylamino-8-hydroxy-naphthalin-3,6-disulfonsäure.

Die Isolierung der nach den vorstehenden beschriebenen Verfahren erhaltenen Reaktivfarbstoffe erfolgt in üblicher Weise durch Aussalzen, beispielsweise mit Natrium- oder Kaliumchlorid, oder durch Eindampfen der neutralen wäßrigen Farbstofflösung, vorzugsweise bei mäßig erhöhter Temperatur und vermindertem Druck oder durch Sprühtrocknung. Die Farbstoffe können als Feststoffformulierungen wie auch als konzentrierte Lösungen eingesetzt werden.

In einer bevorzugten Ausführungsform werden die Farbstoffe als Granulate verwendet. Die Granulate der Farbstoffe können in folgenden Schritten erhalten werden:

Mischgranulierung

Dabei wird das Farbstoffpulver mit 15 bis 55 % Wasser - bezogen auf das Gemisch des Pulvers - befeuchtet, anschließend in einem Mischgranulator das Gemisch geformt und dann getrocknet und entstaubt, wobei das Entstaubungsmittel als Aerosolgemisch auf das Granulat gesprüht wird.

Sprühgranulierung

Dabei wird die Syntheselösung oder -suspension in einem fluidisierenden Sprühtrockner gleichzeitig getrocknet und granuliert.

Farbstoffpulver oder Farbstoffgranulate enthalten im allgemeinen (in Gew.-%) 30 bis 80 % eines Reaktivfarbstoffes der Formel (1), 5 bis 15 % Wasser, jeweils bezogen auf die Gesamtzusammensetzung. Daneben können sie noch anorganische Salze wie Alkalichloride oder Alkalisulfate, Dispergiermittel und Entstaubungsmittel enthalten.

Bevorzugte Feststoffmischungen enthalten zusätzlich Puffersubstanzen, die beim Auflösen in der 20-fachen Menge Wasser (bezogen auf das Gewicht der Farbstoffformierung) einen pH-Wert von 3,5 bis 7,5, insbesondere 4,5 bis 6,5 geben. Diese Puffermischungen werden in Mengen von 3 bis 50, insbesondere 5 bis 15 Gew.-%, bezogen auf das Gesamtgewicht, zugesetzt.

Wäßrige Reaktivfarbstofflösungen enthalten im allgemeinen 5 bis 50 % eines Farbstoffs der Formel (1) (bezogen auf das Gesamtgewicht der Lösung).

Bevorzugte wäßrige Reaktivfarbstofflösungen enthalten zusätzlich Puffersubstanzen und weisen einen pH-Wert von 3,5 bis 7,5, insbesondere 4,5 bis 6,5 auf. Diese Puffersubstanzen werden vorzugsweise in Mengen von 0,1 bis 50 %, insbesondere 1 bis 20 Gew.-%, bezogen auf das Gesamtgewicht, zugesetzt.

Die verwendeten Puffer sind inert gegenüber den Reaktivgruppen. Beispiele für Puffer sind: Natriumdihydrogenphosphat, Dinatriumhydrogenphosphat, Kaliumdihydrogenphosphat, Dikaliumhydrogenphosphat, Natriumacetat, Kaliumacetat, Natriumborat, Kaliumborat, Natriumoxalat, Kaliumoxalat und Natriumhydrogenphthalat. Diese Puffer können für sich allein oder in Mischung verwendet werden.

Die Azoverbindungen (1) besitzen wertvolle Farbstoffeigenschaften. Infolge der faserreaktiven Gruppe $SO_2X$ weisen sie faserreaktive Eigenschaften auf.

Die Reaktivfarbstoffe der Formel (1) ergeben Färbungen mit guten Naß- und Lichtechtheiten. Besonders hervorzuheben ist es, daß die Farbstoffe eine gute Löslichkeit und Elektrolytlöslichkeit bei guten Auszieheigenschaften und hoher Farbstoff-Fixierung aufweisen, und daß sich die nicht fixierten Anteile leicht entfernen lassen.

Die neuen Farbstoffe der Formel (1) eignen sich zum Färben und Bedrucken von Hydroxy- oder Amidgruppen enthaltenen Materialien, wie Textilfaser-, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekannt gewordenen Verfahren erfolgt.

Die angegebenen Formeln sind die der entsprechenden freien Säuren. Die Farbstoffe wurden im allgemeinen in Form von Alkalisalzen, insbesondere der Na-Salze isoliert und zum Färben eingesetzt.

**Beispiel 1**

a) Diazotierung

36,1 g 4-(β-Sulfatoethylsulfonyl)-anilin-2-sulfonsäure (Diazokomponente) werden in 500 ml Eiswasser mit 28 ml 30 %iger Salzsäure versetzt. Man gibt dann tropfenweise 70 ml 10 %ige Natriumnitritlösung zu und rührt solange nach bis nur noch ein geringer Überschuß an Nitrit zu erkennen ist. Dieser wird dann mit Amidosulfonsäure zerstört.

b) Kupplung

33,0 g 1-Amino-6-(β-sulfatoethylsulfonyl)-naphthalin (Mittelkomponente) werden in 400 ml Wasser neutral gelöst. Diese Lösung gibt man zu der nach a) erhaltenen Lösung der Diazotierung und stellt dann den pH der Mischung durch Einwerfen von Natriumhydrogencarbonat auf 3 bis 4 ein und rührt solange bis die Kupplung beendet ist.

c) Diazotierung

Die nach a) erhaltene Lösung des Monoazofarbstoffs der Formel

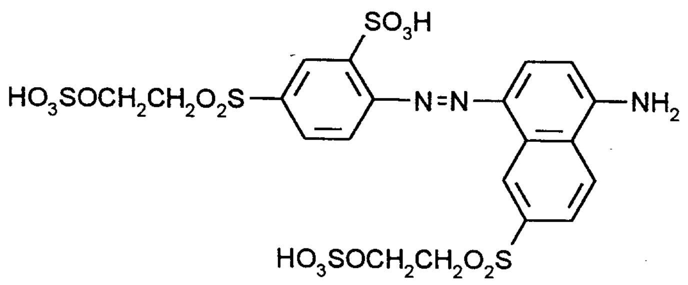

wird mit 30 %iger Salzsäure angesäuert und bei pH 1 bis 2 und 15 bis 20°C durch Eintropfen von 70 ml 10 %iger Natriumnitritlösung diazotiert. Der Überschuß an Nitrit wird mit Amidosulfonsäure zerstört.

d) Kupplung

31,8 g 2-Amino-8-hydroxy-naphthalin-3,6-disulfonsäüre (Kupplungskomponente) werden neutral in 400 ml Wasser gelöst. In diese Lösung wird die nach c) erhaltene Diazotieningslösung gegeben, wobei man durch gleichzeitiges Einstreuen von Natriumhydrogencarbonat einen pH von 5,5 bis 6,5 einhält. Der hergestellte Disazofarbstoff wird gegebenenfalls nach einer Klärfiltration durch Eindampfen des Reaktionsansatzes oder durch Sprühtrocknen isoliert. Man kann auch den Farbstoff aus der Lösung durch Zugabe von 25 Vol.-% Kaliumchlorid abscheiden. Nach Filtration, Trocknen und Mahlen erhält man ein schwarzes Farbstoffpulver, das sich leicht in Wasser mit schwarzer Farbe löst. Der Farbstoff entspricht der Formel

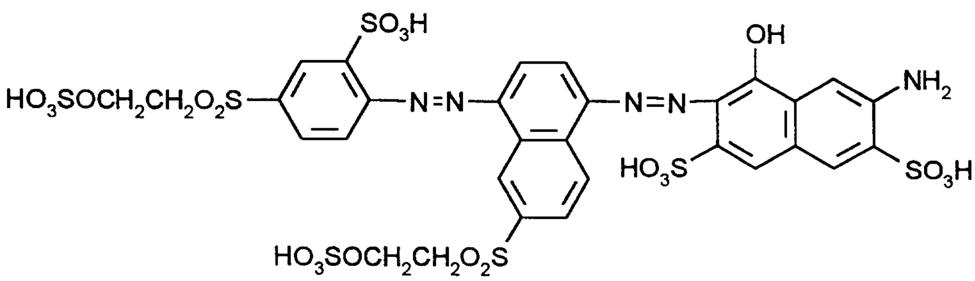

Nach einem der für Reaktivfarbstoffe mit dieser Reaktivgruppe üblichen Färbeverfahren erhält man damit auf Baumwolle schwarze Farbtöne mit guten Echtheitseigenschaften.

Weitere wertvolle Baumwollreaktivfarbstoffe erhält man nach den Angaben dieses Beispiels, wenn man anstelle der bei den verschiedenen Verfabrensschritten eingesetzten Diazo-, Mittel- und Kupplungskomponenten äquimolare Mengen der nachfolgend genannten Verbindungen einsetzt. Die mit diesen Farbstoffen erzielten Farbtöne auf Baumwolle sind in der letzten Spalte angegeben.

| Beispiele | Diazokomponente | Mittelkomponente | Kupplungskomponente | Farbton |
|---|---|---|---|---|
| 2 | 4-(ß-Sulfatoethylsulfonyl)-anilin-2-sulfonsäure | 1-Amino-7-ß-(sulfatoethylsulfonyl)-naphthalin | 2-Amino-8-hydroxynaphthalin-3,6-disulfonsäure | schwarz |
| 3 | 5-(ß-Sulfatoethylsulfonyl)-anilin-2-sulfonsäure | 1-Amino-7-ß-(sulfatoethylsulfonyl)-naphthalin | 2-Amino-8-hydroxynaphthalin-3,6-disulfonsäure | schwarz |
| 4 | 2-(ß-Sulfatoethylsulfonyl)-anilin-5-sulfonsäure | 1-Amino-7-ß-(sulfatoethylsulfonyl)-naphthalin | 2-Amino-8-hydroxynaphthalin-3,6-disulfonsäure | schwarz |
| 5 | 5-(ß-Sulfatoethylsulfonyl)-anilin-2,4-disulfonsäure | 1-Amino-7-ß-(sulfatoethylsulfonyl)-naphthalin | 2-Amino-8-hydroxynaphthalin-3,6-disulfonsäure | schwarz |
| 6 | 4-(ß-Sulfatoethylsulfonyl)-anilin | 1-Amino-7-ß-(sulfatoethylsulfonyl)-naphthalin | 2-Amino-8-hydroxynaphthalin-3,6-disulfonsäure | schwarz |
| 7 | 3-(ß-Sulfatoethylsulfonyl)-anilin | 1-Amino-7-ß-(sulfatoethylsulfonyl)-naphthalin | 2-Amino-8-hydroxynaphthalin-3,6-disulfonsäure | schwarz |
| 8 | 4-(ß-Sulfatoethylsulfonyl)-anilin-disulfonsäure | 1-Amino-6-ß-(sulfatoethylsulfonyl)-naphthalin | 2-Amino-8-hydroxynaphthalin-3,6-disulfonsäure | schwarz |
| 9 | 5-(ß-Sulfatoethylsulfonyl)-anilin-2-sulfonsäure | 1-Amino-6-ß-(sulfatoethylsulfonyl)-naphthalin | 2-Amino-8-hydroxynaphthalin-3,6-disulfonsäure | schwarz |
| 10 | 2-(ß-Sulfatoethylsulfonyl)-anilin-5-sulfonsäure | 1-Amino-6-ß-(sulfatoethylsulfonyl)-naphthalin | 2-Amino-8-hydroxynaphthalin-3,6-disulfonsäure | schwarz |

| Beispiele | Diazokomponente | Mittelkomponente | Kupplungskomponente | Farbton |
|---|---|---|---|---|
| 11 | 5-(ß-Sulfatoethylsulfonyl)-anilin-2,4-disulfonsäure | 1-Amino-6-ß-(sulfatoethyl-sulfonyl)-naphthalin | 2-Amino-8-hydroxy-naphthalin-3,6-disulfonsäure | schwarz |
| 12 | 4-(ß-Sulfatoethylsulfonyl)-anilin | 1-Amino-6-ß-(sulfatoethyl-sulfonyl)-naphthalin | 2-Amino-8-hydroxy-naphthalin-3,6-disulfonsäure | schwarz |
| 13 | 3-(ß-Sulfatoethylsulfonyl)-anilin | 1-Amino-6-ß-(sulfatoethyl-sulfonyl)-naphthalin | 2-Amino-8-hydroxy-naphthalin-3,6-disulfonsäure | schwarz |
| 14 | 4-(ß-Sulfatoethylsulfonyl)-anilin-2-sulfonsäure | 1-Amino-naphthalin-7-sulfonsäure | 2-Amino-8-hydroxy-naphthalin-3,6-disulfonsäure | schwarz |
| 15 | 5-(ß-Sulfatoethylsulfonyl)-anilin-2-sulfonsäure | 1-Amino-naphthalin-7-sulfonsäure | 2-Amino-8-hydroxy-naphthalin-3,6-disulfonsäure | schwarz |
| 16 | 2-(ß-Sulfatoethylsulfonyl)-anilin-5-sulfonsäure | 1-Amino-naphthalin-7-sulfonsäure | 2-Amino-8-hydroxy-naphthalin-3,6-disulfonsäure | schwarz |
| 17 | 5-(ß-Sulfatoethylsulfonyl)-anilin-2,4-disulfonsäure | 1-Amino-naphthalin-7-sulfonsäure | 2-Amino-8-hydroxy-naphthalin-3,6-disulfonsäure | schwarz |
| 18 | 4-(ß-Sulfatoethylsulfonyl)-anilin | 1-Amino-naphthalin-7-sulfonsäure | 2-Amino-8-hydroxy-naphthalin-3,6-disulfonsäure | schwarz |
| 19 | 3-(ß-Sulfatoethylsulfonyl)-anilin | 1-Amino-naphthalin-7-sulfonsäure | 2-Amino-8-hydroxy-naphthalin-3,6-disulfonsäure | schwarz |

| Beispiele | Diazokomponente | Mittelkomponente | Kupplungskomponente | Farbton |
|---|---|---|---|---|
| 20 | 4-(ß-Sulfatoethylsulfonyl)-anilin-2-sulfonsäure | 1-Amino-naphthalin-6-sulfonsäure | 2-Amino-8-hydroxy-naphthalin-3,6-disulfonsäure | schwarz |
| 21 | 5-(ß-Sulfatoethylsulfonyl)-anilin-2-sulfonsäure | 1-Amino-naphthalin-6-sulfonsäure | 2-Amino-8-hydroxy-naphthalin-3,6-disulfonsäure | schwarz |
| 22 | 2-(ß-Sulfatoethylsulfonyl)-anilin-5-sulfonsäure | 1-Amino-naphthalin-6-sulfonsäure | 2-Amino-8-hydroxy-naphthalin-3,6-disulfonsäure | schwarz |
| 23 | 5-(ß-Sulfatoethylsulfonyl)-anilin-2,4-disulfonsäure | 1-Amino-naphthalin-6-sulfonsäure | 2-Amino-8-hydroxy-naphthalin-3,6-disulfonsäure | schwarz |
| 24 | 4-(ß-Sulfatoethylsulfonyl)-anilin | 1-Amino-naphthalin-6-sulfonsäure | 2-Amino-8-hydroxy-naphthalin-3,6-disulfonsäure | schwarz |
| 25 | 3-(ß-Sulfatoethylsulfonyl)-anilin | 1-Amino-naphthalin-6-sulfonsäure | 2-Amino-8-hydroxy-naphthalin-3,6-disulfonsäure | schwarz |
| 26 | 4-(ß-Sulfatoethylsulfonyl)-anilin-2-sulfonsäure | 1-Amino-6-(ß-sulfatoethyl-sulfonyl)-naphthalin | 2-Amino-8-hydroxy-naphthalin-6-sulfonsäure | schwarz |
| 27 | 4-(ß-Sulfatoethylsulfonyl)-anilin-2-sulfonsäure | 1-Amino-6-(ß-sulfatoethyl-sulfonyl)-naphthalin | 2-Phenylamino-8-hydroxy-naphthalin-3,6-disulfonsäure | schwarz |
| 28 | 4-(ß-Sulfatoethylsulfonyl)-anilin-2-sulfonsäure | 1-Amino-6-(ß-sulfatoethyl-sulfonyl)-naphthalin | 2-(3'-Sulfatophenylamino-8-hydroxy-naphthalin-6-sulfonsäure | braunstichig schwarz |

| Beispiele | Diazokomponente | Mittelkomponente | Kupplungskomponente | Farbton |
|---|---|---|---|---|
| 29 | 4-(ß-Sulfatoethylsulfonyl)-anilin-2-sulfonsäure | 1-Amino-6-(ß-sulfatoethyl-sulfonyl)-naphthalin | 2-Phenylamino-8-hydroxy-naphthalin-6-sulfonsäure | braunstichig schwarz |
| 30 | 4-(ß-Sulfatoethylsulfonyl)-anilin-2-sulfonsäure | 1-Amino-6-(ß-sulfatoethyl-sulfonyl)-naphthalin | 8-Phenylamino-8-hydroxy-naphthalin-3,6-disulfonsäure | grünstichig schwarz |
| 31 | 4-Aminobenzoesäure-N-(γ-(ß-sulfatoethylsulfonyl)-n-propyl)-amid | 1-Amino-6-(ß-sulfatoethyl-sulfonyl)-naphthalin | 2-Amino-8-hydroxy-naphthalin-3,6-disulfonsäure | schwarz |
| 32 | 4-Aminobenzoesäure-N-(γ-(ß-sulfatoethylsulfonyl)-n-propyl)-amid | 1-Amino-7-(ß-sulfatoethyl-sulfonyl)-naphthalin | 2-Amino-8-hydroxy-naphthalin-3,6-disulfonsäure | schwarz |
| 33 | 4-Aminobenzoesäure-N-(γ-(ß-sulfatoethylsulfonyl)-n-propyl)-amid | 1-Amino-naphthalin-6-sulfonsäure | 2-Amino-8-hydroxy-naphthalin-3,6-disulfonsäure | schwarz |
| 34 | 4-Aminobenzoesäure-N-(γ-(ß-sulfatoethylsulfonyl)-n-propyl)-amid | 1-Amino-naphthalin-7-sulfonsäure | 2-Amino-8-hydroxy-naphthalin-3,6-disulfonsäure | schwarz |
| 35 | 3-Aminobenzoesäure-N-(γ-(ß-sulfatoethylsulfonyl)-n-propyl)-amid | 1-Amino-6-(ß-sulfatoethyl-sulfonyl)-naphthalin | 2-Amino-8-hydroxy-naphthalin-3,6-disulfonsäure | schwarz |

| Beispiele | Diazokomponente | Mittelkomponente | Kupplungskomponente | Farbton |
|---|---|---|---|---|
| 36 | 3-Aminobenzoesäure-N-(γ-(β-sulfatoethylsulfonyl)-n-propyl)-amid | 1-Amino-7-(β-sulfatoethyl-sulfonyl)-naphthalin | 2-Amino-8-hydroxy-naphthalin-3,6-disulfonsäure | schwarz |

Die $\lambda_{max}$-Werte für umgesetzte Farbstoffe betragen

| Beispiel | nm |
|---|---|
| 2 | 593 |
| 14 | 592 |
| 20 | 592 |
| 28 | 586 |
| 30 | 618 |

## Patentansprüche

**1.** Reaktivfarbstoffe der Formel

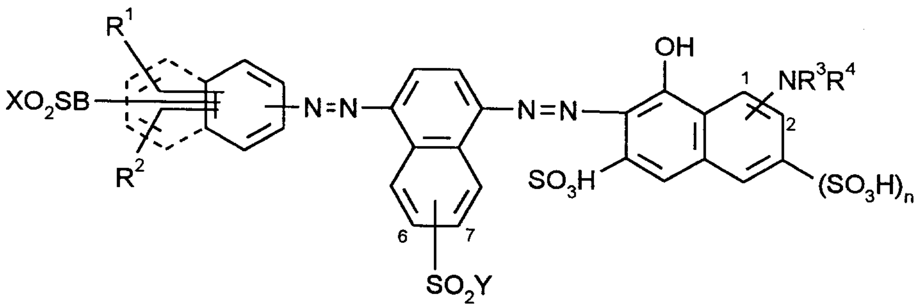

(1)

worin

R[1] und R[2] unabhängig voneinander Wasserstoffatom, $C_1$-$C_4$-Alkyl, insbesondere Methyl, $C_1$-$C_4$-Alkoxy, insbesondere Methoxy, Chlor, Carboxy oder Sulfo bedeuten,

B eine direkte Bindung oder ein Brückenglied ist,

X $CH=CH_2$ oder $CH_2CH_2Z$ ist, wobei Z eine unter Färbebedingungen abspaltbare Gruppe bedeutet,

Y für Hydroxyl steht oder die Bedeutung von X hat, der Rest $SO_2Y$ in 6- oder 7-Stellung gebunden ist,

n 0 oder 1 ist,

$R^3$ Wasserstoff oder $C_1$-$C_4$-Alkyl bedeutet, welches substituiert oder unsubstituiert ist,

$R^4$ Wasserstoff oder $C_1$-$C_4$-Alkyl bedeutet, welches substituiert oder unsubstituiert ist, Phenyl, welches substituiert oder unsubstituiert ist und wobei die Gruppe $NR^3R^4$ in 1 - oder 2-Stellung steht mit der Maßgabe, daß die Gruppe $NR^3R^4$ in 1-Stellung

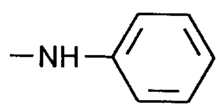

bedeutet, wobei der Phenylrest unsubstituiert oder substituiert ist und wobei n = 1 wenn $NR^3R^4$ in 1-Stellung steht.

**2.** Reaktivfarbstoffe nach Anspruch 1, dadurch gekennzeichnet, daß Z $OSO_3H$, $S_2O_3H$, $OCOCH_3$, $OSO_2CH_3$, Cl oder $OPO_3H_2$ ist.

**3.** Reaktivfarbstoff nach wenigstens einem der vorhergehenden Ansprüche, dadurch gekennzeichnet, daß B bedeutet: $-CH_2-$,

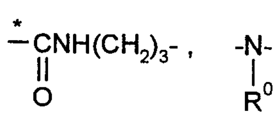 ($R^0$ = H, $CH_3$) ,

*-$NHCO(CH_2)_3$-, wobei die mit Stern gekennzeichnete Bindung an die Diazokomponente geknüpft ist.

4. Reaktivfarbstoff gemäß Anspruch 1, dadurch gekennzeichnet, daß er einer der folgenden Formeln entspricht:

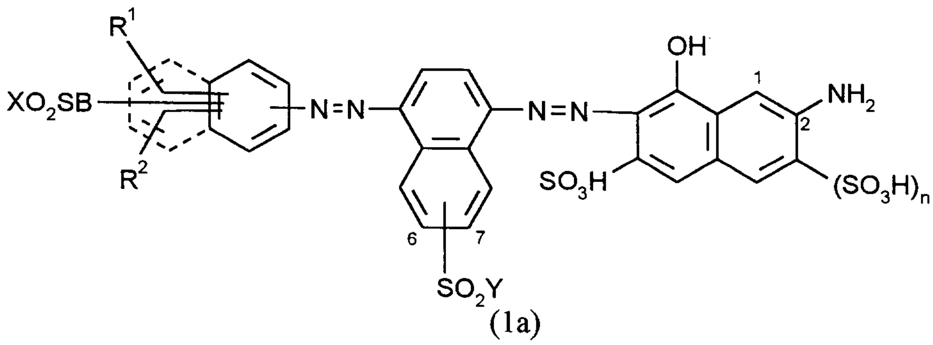

(1a)

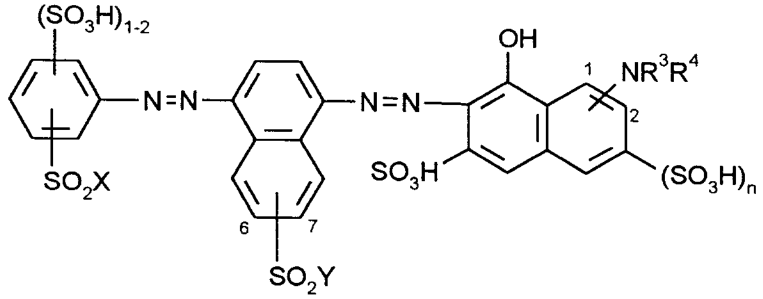

(2)

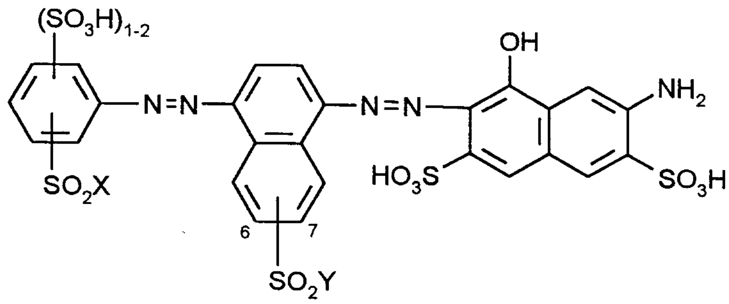

(3)

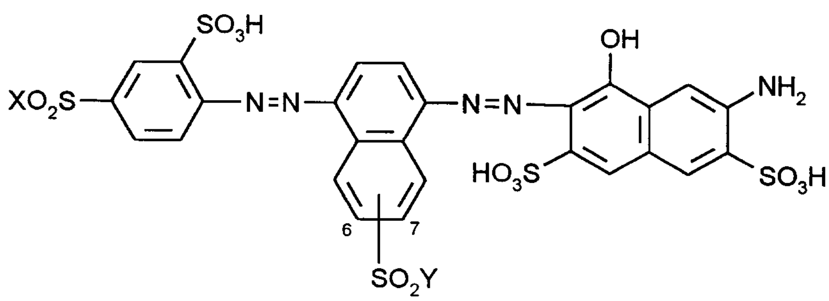

(4)

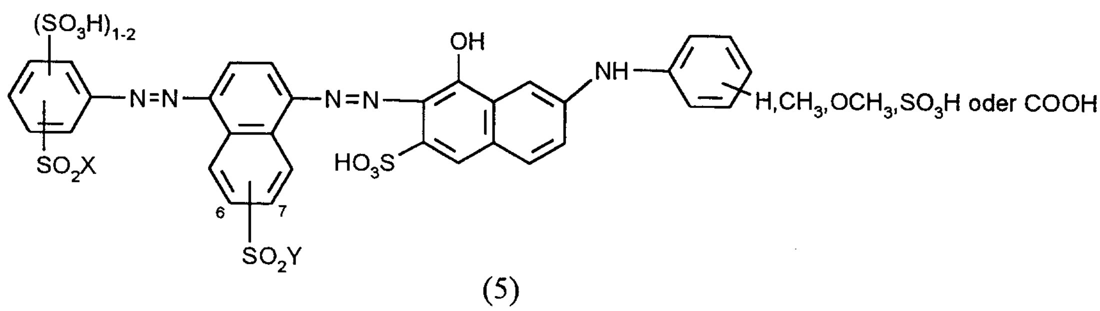

(5)

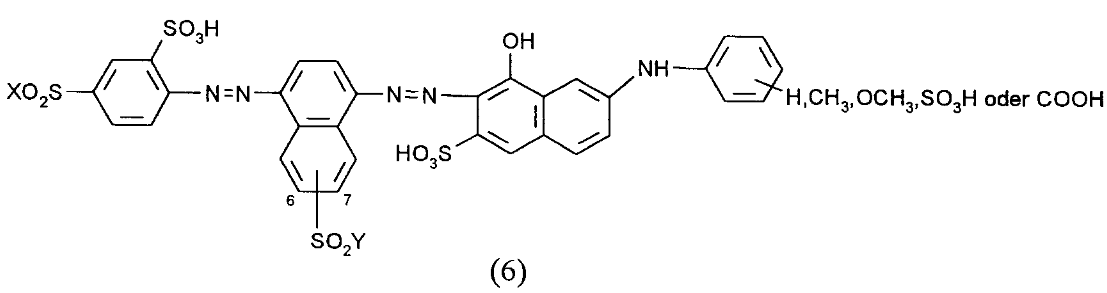

(6)

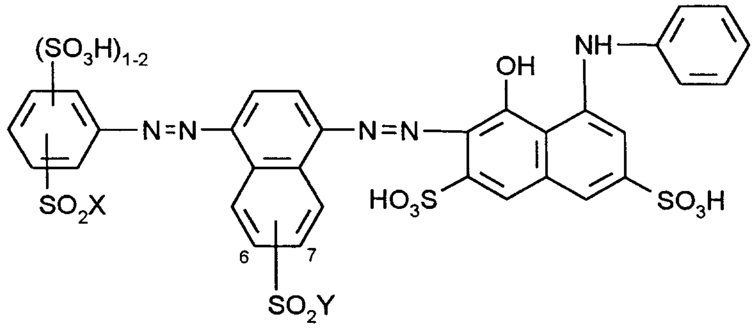

(7)

5. Verfahren zur Herstellung eines Farbstoffs gemäß Anspruch 1, dadurch gekennzeichnet, daß man eine Diazokomponente der Formel (8)

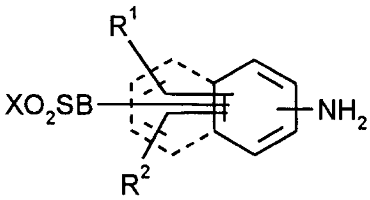

(8)

diazotiert und mit einer Kupplungskomponente der Formel

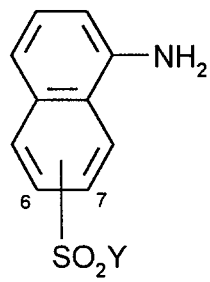

(9)

im pH-Bereich von 2 bis 6 vereinigt, die daraus resultierenden Monoazofarbstoffe weiter diazotiert und mit einer Kupplungskomponente der Formel

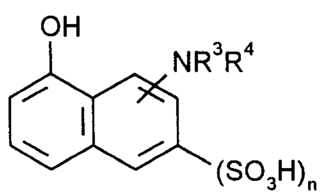

(10)

im pH-Bereich von 4 bis 8 zu Farbstoffen der Formel (1) kuppelt, worin die Substituenten die in Anspruch 1 angegebene Bedeutung haben.

6. Verfahren zum Färben oder Bedrucken von hydroxylgruppenhaltigen oder stickstoffhaltigen Fasermaterialien mit einem Reaktivfarbstoff, dadurch gekennzeichnet, daß ein Reaktivfarbstoff gemäß Anspruch 1 verwendet wird.

7. Gefärbte oder bedruckte Substrate, dadurch gekennzeichnet, daß sie wenigstens teilweise mit einem Reaktivfarbstoff gemäß Anspruch 1 gefärbt oder bedruckt worden sind.